# EUROPÄISCHE PATENTSCHRIFT

(11) **EP 0 378 795 B1**
(45) Veröffentlichungstag und Bekanntmachung des Hinweises auf die Patenterteilung: **15.02.1995**
(21) Anmeldenummer: 89122440.4
(22) Anmeldetag: 05.12.1989
(51) Int. Cl.: B44C 5/04, E04F 13/18, B32B 27/00, B29C 70/00, B29C 70/68, B29C 67/24

(54) **Formkörper, vorzugsweise in Plattenform, insbesondere zweischichtige Dekorplatte**
Moulded article, preferably a board-shaped one, especially a two-layered decorative panel
Corps moulé, spécialement en forme de plaque, en particulier panneau décoratif à deux couches

(30) Priorität: 18.01.1989 DE 3901258
(43) Veröffentlichungstag der Anmeldung: 25.07.1990
(73) Patentinhaber: Heidelberger Kunststofftechnik GmbH, D-69018 Heidelberg (DE)
(72) Erfinder: Buchert, Hans, D-6520 Worms 26 (DE)
(74) Vertreter: Ratzel, Gerhard, Dr.

(56) Entgegenhaltungen:
- EP-A- 0 167 486
- DE-A- 2 356 379
- DE-U- 8 810 492
- US-A- 3 977 153
- US-A- 4 353 967

## Beschreibung

Die vorliegende Erfindung betrifft einen zweischichtigen Formkörper als Dekorplatte, mit einer reliefartig ausgebildeten Schicht und einer von dieser abgedeckten, eigensteifen und aus Verfüllpartikeln bestehenden Schicht, welche Verfüllpartikel mit Wasserglas benetzt und somit sowohl miteinander als auch mit der reliefartigen Schicht verklebt sind.

Aus dem EP-A 0 167 486 ist ein Mehrschichtkörper mit mindestens einer Schicht aus ungereinigten, unsortierten, petrochemischen Produkten - Produktschicht - bekannt. Die Herstellung der festen Schichtkörper im Rahmen der hier vorgeschlagenen Erfindung kann entweder durch thermische Behandlung oder Zugabe eines Bindemittels, welches bereits bei Raumtemperatur aushärtet, erfolgen. Als entsprechendes Bindemittel kommt ein 2-Komponentenkleber, wie ein Epoxid mit Polyamid als Härter oder Polyisocianat in Frage.

Zum Stand der Technik ist auch auf die DE-OS 23 56 379 der gleichen Anmelderin hinzuweisen, die sich auf Formkörper, insbesondere Dekorplatten mit wenigstens einer reliefartig ausgebildeten Seitenfläche bezieht, welche Formkörper eine geschäumte Polystyrolschicht und eine Kunststoff-Folie aufweisen, wobei die Kunststoff-Folie reliefiert ist und an ihrer ganzen, der Polystyrol-Hartschaumschicht zugewandten Fläche, mit der Polystyrol-Hartschaumschicht verbunden ist.

Es wird ferner zum Stand der Technik auf die entsprechende deutsche Patentschrift 23 56 379 in Verbindung mit den dort genannten Literaturstellen, nämlich die österreichische Patentschrift 235 563 sowie die US-Patentschriften 2 989 783 und 2 977 639 hingewiesen.

Diese Formkörper, insbesondere Dekorplatten des Standes der Technik sind teilweise nicht schwerentflammbar, oder besitzen teilweise ein ungünstiges Brandverhalten.

Ferner sind die Materialpreise der bisherigen Dekorplatten relativ hoch, da die Ausgangsprodukte verhältnismäßig teuer sind.

Bekanntlich bestehen die bisherigen Platten hauptsächlich aus einer tiefgezogenen Folienschicht, die dann entweder mit zugeschnittenen Schaumstoffplatten, beispielsweise Polystyrolplatten hinterklebt oder in direkten Ausschäumverfahren mit einem Haftvermittler, der sich auf der Rückseite der Folie befindet, verbunden sind.

Insbesondere sind auch die notwendigen Klebstoffe bzw. Haftvermittler für das ungünstige Brandverhalten dieser Verbundelemente des Standes der Technik verantwortlich.

Vorliegender Erfindung liegt nun auch die Erkenntnis zugrunde, daß zur Hinterfüllung der als Dekorplatten einsetzbaren Formkörper keineswegs nur Polystyrolschaum geeignet ist; vielmehr können bei der vorliegenden Erfindung zur Hinterfüllung der vorzugsweise vorgeprägten Folien auch Recycling-Materialien, vorzugsweise in Schnitzelform, Krümmelform, Perlchenform, Häckselform, ferner Gewebeteilchen, Gewirketeilchen, Granulatteilchen und Schaumstoffpartikelchen (Verfüllpartikel) vorteilhafterweise eingesetzt werden, wodurch eine sprunghafte Verbilligung des Produkts erreicht wird.

Um nun außer dem Einsparungseffekt auch eine sprunghafte Verbesserung der Randfestigkeit bzw. des Brandverhaltens zu erreichen, wird gemäß vorliegender Erfindung bei einem Formkörper der eingangs genannten Gattung ferner vorgeschlagen die Verfüllpartikelchen mittels Wasserglas miteinander zu verkleben.

Zur Herstellung der erfindungsgemäßen Formkörper können beispielsweise die Kunststoff-Folien auf einer Tiefziehanlage mit beispielsweise einer Kapazität von 10 bis 12 Platten pro Minute hergestellt werden, um sodann die Verfüllpartikelchen nach Benetzung mit Kleber beispielsweise mit Wasserglas in die tiefgezogene Folienschale eingebracht und gegebenfalls mittels Temperatur und Druck verfestigt werden.

Damit wird ein Optimum an Stabilität erreicht, da alle Bereiche der tiefgezogenen Folie mit der Mischung aus Verfüllpartikeln und Wasserglas gefüllt sind.

Es kann zunächst auch ein plattenförmiges Flächengebilde bestehend aus Verfüllpartikeln und Wasserglas hergestellt und die Rückseite der Folie, die gegebenenfalls reliefiert ist, mit diesem plattenförmigen Gebilde mittels Wasserglas verklebt werden.

Das Aushärten des Wasserglases geschieht, je nach der Natur des Wasserglases, nach ansich bekannten verschiedenen Verfahren, vorzugsweise mittels Anwendung von Temperatur, gegebenenfalls unter gleichzeitiger Anwendung von Druck.

Ein weiterer Vorteil der erfindungsgemäßen Formkörper, insbesondere Dekorplatten, besteht darin, daß die harte Schicht der mittels Wasserglas verklebten Verfüllmasse vor allem auch bezüglich ihrer Ecken und Kanten, sehr formstabil ist, während bisher bei der Verwendung von ausschließlich geschäumtem Polystyrol als Hinterfüllmaterial häufig an diesen Stellen Beschädigungen stattfanden.

Die Stabilität der erfindungsgemäßen Formkörper ist so groß, daß sie nicht nur in der oben beschriebenen Weise als Dekorplatten einsetzbar sind, sondern bei dem Einsatz von z.B. Schaumstoffpartikeln als zu verklebendes Hinterfüllmaterial eine vorteilhafte Verwendung als besonders druckfeste Wärmedämmplatte ermöglicht wird.

Ein weiterer Vorteil der erfindungsgemäßen Formkörper besteht darin, daß man an Stelle der Kunststoff-Folien auch Textilflächen mit dem mittels Wasserglas verfestigten flächenhaften Verfüllpartikeln verbinden kann und zwar vorzugsweise ebenfalls unter Anwendung von Wasserglas als Kleber.

Bisher ließen sich nach den bekannten Verfahren keine reliefierten Platten mit Textiloberflächen herstellen, da sich diese nicht im Vakuum verformen ließen. Entsprechendes gilt auch bezüglich der Verwendung von Vliesstoffen in flächiger Form.

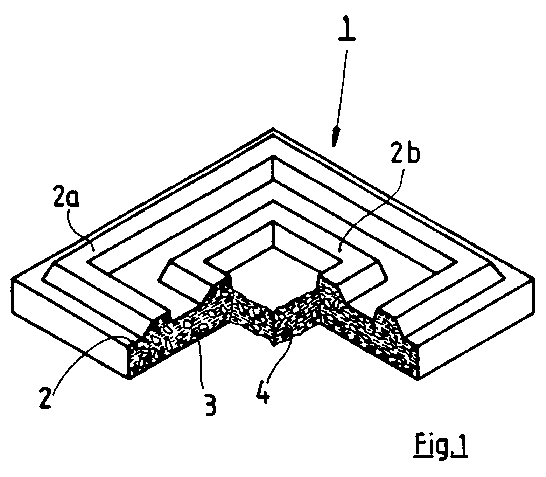

Im folgenden wird ein Formkörper, nämlich eine Dekorplatte gemäß vorliegender Erfindung anhand der beiliegenden Zeichnung weiterhin beschrieben.

Mit dem Bezugszeichen 1 ist der erfindungsgemäße Formkörper in Gestalt einer reliefierten Dekorplatte dargestellt. Mit dem Bezugszeichen 2 ist die reliefierte Folie dargestellt, wobei die oberseitige Folienfläche die Relieferhebungen 2a und 2b jeweils in Gestalt von quadratischen Ornamenten vorliegen, die geometrisch gesprochen einander ähnlich sind und einen zusammenfallenden Mittelpunkt aufweisen. Als Sichtfläche kann jedoch auch jede andere Form Anwendung finden.

Die reliefierte Kunststoff-Folie 2 ist mit den Verfüllpartikeln 3 erfindungsgemäß ausgefüllt, wobei die Verfüllpartikel mittels Wasserglas miteinander verklebt sind. Die Verfüllpartikel haben verschiedene Korngrößen. Mit dem Auge sichtbare Verfüllpartikel in Gestalt von Perlchen tragen das Bezugszeichen 4. Die Tatsache, daß die Verfüllpartikel mittels Wasserglas sowohl miteinander als auch mit der Unterseite der reliefierten Kunststoff-Folie verklebt sind, ist für den Fachmann mit bloßem Auge durch Erkennen der entsprechenden charakteristischen Wasserglasstruktur erkennbar.

### Liste der Bezugszeichen:

- 1: Formkörper
- 2: reliefierte Kunststoff-Folie
- 2a 2b: Relieferhebungen
- 3: Verfüllmaterial
- 4: Verfüllmaterialpartikel in Gestalt von Perlchen

## Patentansprüche

1. Zweischichtiger Formkörper (1) als Dekorplatte, mit einer reliefartig ausgebildeten Schicht (2) und einer von dieser abgedeckten, eigensteifen und aus Verfüllpartikeln bestehenden Schicht, welche Verfüllpartikel (3) mit Wasserglas benetzt und somit sowohl miteinander als auch mit der reliefartigen Schicht (2) verklebt sind.

2. Formkörper nach Anspruch 1,
dadurch gekennzeichnet,
daß die reliefartig ausgebildete Schicht (2) eine flächenhafte Textilschicht und/oder eine flächenhafte Vliesstoffschicht ist.

## Claims

1. A two-layer moulded body (1) as a decorative panel, having one layer (2) formed in relief and one layer, covered by the latter, which is inherently rigid and is composed of filling particles, which filling particles (3) are wetted with water glass and are thus bonded both with one another and also with the layer (2) in relief.

2. A moulded body according to Claim 1, characterised in that the layer (2) formed in relief is an areal textile layer and/or an areal non-woven fabric layer.

## Revendications

1. Corps moulé à deux couches (1) en tant que plaque décorative, avec une couche (2) formée en relief et avec une couche, recouverte par celle-ci, à rigidité propre et consistant en des particules de remplissage, lesquelles particules de remplissage (3) sont revêtues de verre soluble et ainsi collées aussi bien les unes aux autres qu'à la couche en relief (2).

2. Corps moulé selon la revendication 1, caractérisé en ce que la couche formée en relief (2) est une couche de textile du type en nappe et/ou une couche de non-tissé du type en nappe.
